# FASCICULE DE BREVET EUROPEEN

(11) **EP 2 882 322 B1**
(45) Date de publication et mention de la délivrance du brevet: **17.08.2016**
(21) Numéro de dépôt: 13744676.1
(22) Date de dépôt: 02.07.2013
(51) Int. Cl.: A47J 31/52, A47J 37/12, F24C 7/08, G08C 17/00, G08C 17/02

(54) **PROCEDE ET DISPOSITIF DE CONTROLE ET/OU DE COMMANDE D'UN APPAREIL ELECTROMENAGER**
VERFAHREN UND VORRICHTUNG ZUR KONTROLLE UND/ODER STEUERUNG EINER ELEKTRISCHEN HAUSHALTSVORRICHTUNG
METHOD AND DEVICE FOR COMMANDING AND/OR CONTROLLING AN ELECTRODOMESTIC APPLIANCE

(30) Priorité: 08.08.2012 FR 1257697
(43) Date de publication de la demande: 17.06.2015
(73) Titulaire: SEB S.A., 69130 Écully (FR)
(72) Inventeur: CUBIZOLLES, Serge, Jean, 38780 Oytier St Oblas (FR); DECROZE, Nicolas, 38200 Vienne (FR); HOUNI, Karim, 69007 Lyon (FR)
(74) Mandataire: Verriest, Philippe
(86) Numéro de dépôt international: PCT/FR2013/051560
(87) Numéro de publication internationale: WO 2014/023882

(56) Documents cités:
- EP-A2- 1 494 192
- US-A1- 2005 096 760
- US-A1- 2011 144 778
- US-A1- 2011 260 903

## Description

La présente invention concerne le domaine des appareils électroménagers et en particulier un dispositif de contrôle et/ou de commande du fonctionnement d'au moins un appareil électroménager.

Il est connu de commander et/ou de contrôler un appareil électroménager à distance, notamment depuis un terminal de communication portable. Le terminal comporte une interface utilisateur destinée à un affichage d'informations de contrôle et/ou de commande, et, destinée à une entrée d'informations de commande. Le terminal comporte des moyens de traitement d'informations pour permettre à l'utilisateur de choisir les informations de commande tout en prenant en compte les informations de contrôle. Les moyens de traitement déterminent également des étapes de fonctionnement de l'appareil électroménager et signalent à l'utilisateur les manipulations à exécuter au moment approprié.

Des premiers moyens de communication entre le terminal et le dispositif permettent un échange d'informations. Les informations de commande sont émises par terminal et transférées au dispositif par les premiers moyens de communication. Les informations de contrôle sont émises par le dispositif et transférées vers le terminal par les premiers moyens de communication.

Selon l'état de la technique, l'appareil électroménager comporte des moyens de contrôle des paramètres de fonctionnement. Les paramètres de fonctionnement sont par exemple un réglage de l'appareil ou une mesure d'une grandeur physique, comme une température. Les paramètres de fonctionnement constituent les informations de contrôle.

Des seconds moyens de communication sans fil permettent un échange des informations de contrôle émises par l'appareil électroménager vers le dispositif. Les seconds moyens de communication sans fil permettent des transférer les données de commande du dispositif vers l'appareil électroménager. L'appareil électroménager comporte des moyens de réglage à partir des données d'informations de commande.

L'ensemble de contrôle et/ou de commande comportant le terminal de communication portable et le dispositif de contrôle et/ou de commande donne satisfaction en ce que l'utilisateur bénéficie d'une assistance lors de l'utilisation d'appareils électroménager.

Le brevet US 2005/0096760 divulgue un tel système de contrôle.

Néanmoins un tel dispositif ne peut plus assurer la fonction de commande et/ou de contrôle lorsque le terminal de communication portable est indisponible.

En effet, le terminal de communication portable est susceptible d'être sollicité pour d'autres tâches et ne plus assurer son rôle de traitement des informations. L'ensemble de contrôle et/ou de commande ne peut alors plus fonctionner.

De plus pour agencer les premiers moyens de communication, le dispositif de contrôle et/ou de commande est destiné à une géométrie ou construction particulière du terminal de communication portable. Selon le modèle ou la marque du terminal de communication portable, le dispositif ne sera pas forcément adapté.

La présente invention a pour but de résoudre tout ou partie des inconvénients mentionnés ci-dessus.

A cet effet, la présente invention a pour objet un procédé et un dispositif de contrôle et/ou de commande du fonctionnement d'au moins un appareil électroménager.

Il doit être entendu par appareil électroménager, tout appareil disposant d'une fonction électrique, par exemple un four, une plaque chauffante à induction ou vitrocéramique, mais aussi un autocuiseur, un pèse-aliment ou un pèse-personne ayant des fonctions électriques assurées à l'aide de piles ou d'accumulateurs.

Selon un aspect de l'invention, le procédé de contrôle et/ou de commande du fonctionnement d'au moins un appareil électroménager destiné à être exécuté par un dispositif de contrôle et/ou de commande, le procédé définissant un premier et un deuxième mode de fonctionnement,
le premier mode de fonctionnement consiste à exécuter les opérations suivantes :
- recevoir des informations de commandes (I_{T}) en provenance d'un terminal de communication et transmettre ces informations de commandes à l'au moins un appareil électroménager, et/ou
- recevoir des informations de contrôle (I_{R}) en provenance de l'au moins un appareil électroménager et transmettre ces informations de contrôle (I_{R}) au terminal de communication,
le second mode de fonctionnement consiste à exécuter les opérations suivantes :
- générer des informations de commande secondaire (I_{T2}) et transmettre ces informations de commande secondaire (I_{T2}) à l'au moins un appareil électroménager, et/ou
- recevoir des informations de contrôle (I_{R}) en provenance de l'au moins un appareil électroménager ;
le procédé comprenant les étapes consistant à :
- déterminer continuellement la capacité du dispositif à recevoir des informations de commande (I_{T}) en provenance du terminal de communication,
- fonctionner selon le premier mode de fonctionnement lorsque le dispositif est en capacité de recevoir des informations de commande (I_{T}) en provenance du terminal de communication,
- fonctionner selon le second mode de fonctionnement lorsque le dispositif n'est pas en capacité de recevoir des informations de commande (I_{T}) en provenance du terminal de communication.

Si la communication est interrompue entre le terminal de communication et le dispositif, les moyens traitements du dispositif peuvent transmettre des informations de commande secondaire (I_{T2}) à l'appareil électroménager tout en prenant en compte les informations de contrôle (I_{R}).

Selon un aspect de l'invention le second mode de fonctionnement comprend une opération de mémorisation d'au moins une information de contrôle (I_{R}).

Selon un aspect de l'invention, le second mode de fonctionnement comprend une opération de mémorisation d'au moins une information de commande secondaire (I_{T2}).

La mémorisation d'informations contrôle (IR) et de commande secondaire (IT2) permet de mettre à jour le terminal de communication portable avec les informations qu'il n'a pas reçues lors de la période précédente selon le second mode de fonctionnement.

Ainsi le terminal de communication a toutes les informations nécessaires pour poursuivre la commande et/ou le contrôle de l'appareil électroménager.

Selon un aspect de l'invention, le premier mode de fonctionnement comprend une opération de mémorisation d'au moins une information de commande (I_{T}) par les moyens de traitement de l'information du dispositif.

Le dispositif mémorise des informations de commande (IT) selon le premier mode de fonctionnement. Le dispositif anticipe ainsi le passage au second mode de fonctionnement. Le dispositif mémorise des informations de commande (IT) pour prendre le relais lors du passage au second mode de fonctionnement.

Selon un aspect de l'invention, le passage du second au premier mode fonctionnement comprend une opération de transfert des informations mémorisées (I_{M}), les informations mémorisées (I_{M}) étant la résultante de l'au moins une information de contrôle (I_{R}) et/ou de l'au moins une information de commande secondaire (I_{T2}) mémorisées par le second mode de fonctionnement.

Les informations mémorisées (I_{M}) transmises au terminal mettent à jour les moyens de traitement du terminal dans le but de poursuivre l'opération en cours réalisée par l'appareil électroménager.

Selon un aspect de l'invention, le premier mode de fonctionnement comprend une opération de transmission d'informations de commandes déportée (I_{C}) en provenance du dispositif vers le terminal.

Selon le premier mode de fonctionnement, le terminal est en capacité de recevoir à la fois des informations de commande du terminal et de l'interface de commande du dispositif. L'utilisateur a le choix des commandes qu'il souhaite utiliser.

Selon un aspect de l'invention, un produit programme d'ordinateur comprend des portions de code de programme pour l'exécution des étapes d'un procédé.

Selon un aspect de l'invention, un support d'enregistrement lisible par un dispositif de contrôle et/ou de commande sur lequel est enregistré un produit programme d'ordinateur.

La présente invention concerne également un dispositif de contrôle et/ou de commande du fonctionnement d'au moins un appareil électroménager comprenant :
- une prise de connexion complémentaire à une prise de connexion appartenant à un terminal de communication portable,
- des premiers moyens de communication selon un premier protocole de communication destinés à assurer une communication par l'intermédiaire de la prise de connexion ; et
- des seconds moyens de communication sans fil selon un second protocole de communication destinés à assurer une communication avec l'au moins un appareil électroménager équipé de moyens de communication sans fil, et
- des moyens de traitement d'informations agencés pour mettre en oeuvre les étapes d'un procédé.

Selon un aspect de l'invention, des moyens d'affichage sont agencés pour permettre la lecture d'au moins une information mémorisée (IM).

Selon un aspect de l'invention, une interface de commande est agencée pour permettre aux moyens de traitement du dispositif :
- la génération des informations de commande secondaire (I_{T2}) selon le premier mode de fonctionnement, ou
- la génération des informations de commande déportée (I_{C}) selon le deuxième mode de fonctionnement.

Selon un aspect de l'invention, le dispositif de contrôle et/ou de commande comprend un élément de protection destiné à envelopper le terminal de communication portable au moins partiellement, le terminal de communication portable étant raccordé au dispositif de contrôle et/ou de commande par la prise de connexion.

Ainsi le dispositif de contrôle et/ou de commande est recouvert par l'élément de protection qui peut être une coque plastique ou silicone dans laquelle vient se glisser le terminal de communication portable.

Selon un aspect de l'invention, le dispositif de contrôle et/ou de commande comprend des moyens de réception et/ou de maintien en position du terminal de communication portable de façon à permettre la lecture sur des moyens d'affichage du terminal lorsque le terminal de communication est reçu par les moyens de réception et/ou de maintien en position,
le dispositif de contrôle et/ou de commande comprenant également un organe de support agencé pour être posé sur une surface plane ou fixé à une paroi.

Les moyens de réception et/ou de maintien en position solidarisent le dispositif de contrôle et/ou de commande et le terminal de communication portable, le terminal de communication portable étant connecté au dispositif de contrôle et/ou de commande par la prise de connexion.

Selon un aspect de l'invention, un ensemble de contrôle et/ou de commande, est composé :
- du terminal de communication comprenant une interface utilisateur comprenant des moyens d'affichage et de saisie agencés pour permettre la génération des informations de commande (I_{T}) par des moyens de traitement d'information du terminal,
- du dispositif de contrôle et/ou de commande.

Selon un aspect de l'invention, les premiers moyens de communication entre le terminal de communication portable et le dispositif sont une connexion physique avec un protocole d'échange de données de type flux audio.

Selon un aspect de l'invention, le terminal de communication portable comporte des moyens de connexion à un réseau de communication public, notamment de type internet et/ou réseau de téléphonie mobile. Le terminal comporte des moyens de téléchargement d'instructions pour la réalisation d'une fonction d'un appareil électroménager.

De toute façon, l'invention sera bien comprise à l'aide de la description qui suit, en référence aux figures annexées représentant, à titre d'exemple non limitatif, un dispositif de contrôle et/ou de commande et un ensemble de contrôle et/ou de commande d'au moins un appareil électroménager selon l'invention.
Figure 1 est un schéma synoptique d'un ensemble de contrôle et/ou de commande et d'un appareil électroménager selon un premier mode de fonctionnement.
Figure 2 est un schéma synoptique d'un ensemble de contrôle et/ou de commande et d'un appareil électroménager selon un second mode de fonctionnement.
Figure 3 est un schéma synoptique d'un ensemble de contrôle et/ou de commande et d'un appareil électroménager selon une variante du deuxième mode de fonctionnement.
Figure 4 est une vue en perspective d'un dispositif de contrôle et/ou de commande du fonctionnement d'au moins un appareil électroménager.
Figure 5 est un schéma bloc détaillant le fonctionnement d'un ensemble de contrôle et/ou de commande et d'un appareil électroménager selon le premier et le deuxième mode fonctionnement.
Figure 6 est une vue en perspective de l'ensemble de contrôle et/ou de commande d'un appareil électroménager.

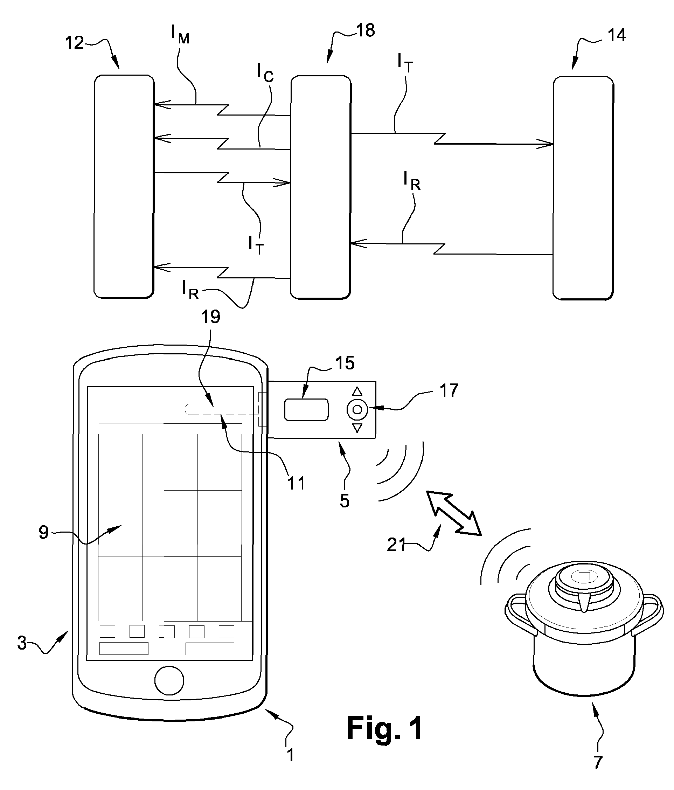

Selon un mode réalisation décrit des figures 1 à 4, un ensemble de contrôle et/ou de commande 1 comporte un terminal de communication portable 3 et un dispositif de contrôle et/ou de commande 5 d'un appareil électroménager 7.

Comme montré plus particulièrement sur les figures 1 à 3, le terminal de communication portable 3 comporte une interface utilisateur 9, une prise de connexion 11 et des moyens de traitement d'informations 12. Un appareil électroménager 7 comprend des moyens d'émission et de réception 14.

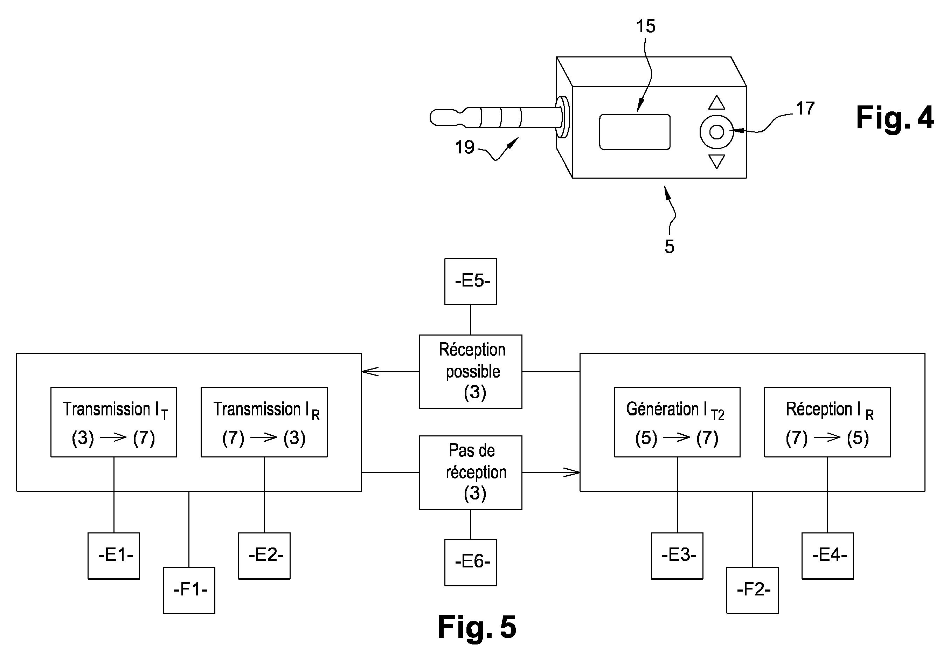

Comme montré plus particulièrement sur la figure 4, le dispositif de contrôle et/ou de commande 5 comporte des moyens d'affichage 15, une interface de commande 17, des moyens de traitement d'informations 18 et une prise de connexion complémentaire 19 avec la prise de connexion 11 du terminal de communication portable 3.

Selon un mode de réalisation décrit par les figures 1 à 4, la prise de connexion 11 du terminal 3 est une prise femelle jack et la prise de connexion complémentaire 19 du dispositif 5 est une prise mâle jack. Des premiers moyens de communication, agencés entre la prise de connexion 11 et la prise de connexion complémentaire 19, permettent un échange de données de type flux audio.

Des seconds moyens de communication sans fil 21 sont agencés pour permettre un échange d'informations entre les moyens de traitement d'informations 18 du dispositif 5 et les moyens d'émission et de réception 14 de l'appareil électroménager 7. Selon un mode de réalisation décrit par les figures 1 à 4, les seconds moyens de communication sans fil 21 sont de type radio fréquence.

Les moyens de traitement d'informations 18 du dispositif 5 sont agencés pour transformer un signal radio fréquence en un signal audio DTMF ou de type Modem et inversement.

Selon un mode de réalisation décrit par les figures 1 à 4, les moyens de traitement d'informations 18 du dispositif 5 comportent un microcontrôleur en capacité de réaliser au moins une opération de mémorisation et au moins une opération de traitement d'informations.

Selon un mode de réalisation décrit par les figures 1 à 4, le dispositif de contrôle et/ou de commande 5 comporte un avertisseur sonore, une fonction chronomètre et une alimentation électrique interne.

L'invention vise à fournir une solution universelle pour faire communiquer un dispositif de contrôle et/ou de commande 5 avec un appareil électroménager 7, car la prise de connexion 11 est connectable à la prise de connexion complémentaire 19 sans contrainte de géométrie ou de construction pour le terminal de communication portable 3.

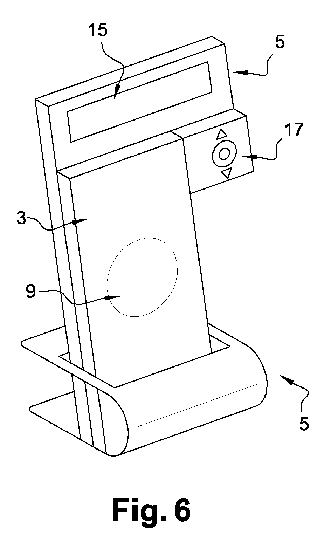

Le dispositif de contrôle et/ou de commande 5 peut comprendre des moyens de réception et/ou de maintien en position du terminal de communication portable 3, comme illustré à la figure 6. Le dispositif de contrôle et/ou de commande 5 peut également comprendre un organe de support agencé pour être posé sur une surface plane.

Les moyens de réception et/ou de maintien en position solidarisent le dispositif de contrôle et/ou de commande 5 et le terminal de communication portable 3, le terminal de communication portable 3 étant connecté au dispositif de contrôle et/ou de commande 5 par la prise de connexion 11.

Selon un premier mode de fonctionnement F1, illustré par les figures 1 et 5, la prise de connexion 11 est connectée à la prise de connexion complémentaire 19. Les moyens de traitement d'informations 18 du dispositif 5 déterminent continuellement la capacité du dispositif à recevoir des informations de commande(I_{T}) en provenance du terminal de communication 3. Le premier mode de fonctionnement F1 reste actif tant que tant que le dispositif a la capacité de recevoir les informations de commande (I_{T}) du terminal de communication portable 5.

Les informations de commande (I_{T}) sont transmises de l'appareil électroménager 7 au terminal de communication portable 3, comme illustré par la fonction E1 sur la figure 5. Le terminal 3 est apte à recevoir des instructions de commande de l'utilisateur en provenance de l'interface utilisateur 9. Les instructions de commande sont également susceptibles de provenir de l'interface de commande 17 du dispositif 5: il s'agit alors d'informations de commande déportée (I_{C}). Les informations de commande déportée (I_{C}) sont transmises par les premiers moyens de communication au terminal 3 et sont traitées par les moyens de traitement 12 du terminal 3. Les moyens de traitement d'informations 1 2 d u terminal 3 génèrent les informations de commande (I_{T}) à partir des instructions de commande.

Les informations de commande (I_{T}) sont transmises du terminal 3 au dispositif 5 par les premiers moyens de communication, sous forme de flux audio. Les informations de commande (I_{T}) sont ensuite transmises à l'appareil électroménager 7 par les seconds moyens de communication sans fil 21. L'appareil électroménager 7 comporte des moyens de réception 14 des informations de commande (I_{T}). La transmission des informations de commande (I_{T}) du terminal 3 à l'appareil électroménager 7 est illustrée par la fonction E1 sur la figure 5.

L'appareil électroménager 7 met en oeuvre les informations de commande (I_{T}). A titre d'exemple non limitatif, une information de commande (I_{T}) peut être la modification du réglage de puissance d'un autocuiseur.

L'appareil électroménager 7 comporte des moyens de contrôle des paramètres de fonctionnements. Les moyens de contrôle assurent la génération des informations de contrôle (I_{R}). L'appareil électroménager 7 comporte des moyens d'émission 14 des informations de contrôle (I_{R}).vers le dispositif 5 par les seconds moyens de communication sans fil 21. Le dispositif 5 transmet ensuite les informations de contrôle (I_{R}) au terminal 3 par les premiers moyens de communication. La transmission des informations de contrôle (I_{R}) de l'appareil électroménager 7 au terminal 3 est illustrée par la fonction E2 sur la figure 5.

Les informations de contrôle (I_{R}) sont ensuite traitées par les moyens de traitements d'informations 12. Les moyens de traitements d'informations 12 prennent en compte les instructions de commande de l'utilisateur et les informations de contrôle (I_{R}) pour l'élaboration informations de commande (I_{T}).

L'interface utilisateur comporte une zone d'affichage d'au moins une information de commande (I_{T}) te d'au moins une information de contrôle (I_{R}).

Le terminal 3 comporte des moyens de connexion à un réseau de communication public, notamment de type internet et/ou réseau de téléphonie mobile. Les moyens de traitement d'informations 12 ont la capacité de télécharger une recette ou une suite d'instructions de fonctionnement pour guider l'utilisateur grâce aux moyens de connexion.

Le premier mode de fonctionnement F1 reste actif tant que le dispositif 5 a la capacité de recevoir les informations de commande (I_{T}) du terminal de communication portable 5. Lorsque le dispositif 5 n'a plus la capacité de recevoir les informations de commande (I_{T}) du terminal de communication portable 5, un deuxième mode de fonctionnement F2 devient actif, comme illustré par la fonction E6 sur la figure 5.

Lors du passage du premier au deuxième mode de fonctionnement, les premiers moyens de communication cessent de fonctionner. Le dispositif 5 poursuit la transmission d'au moins une information de commande (I_{T}) en cours car une opération de mémorisation est réalisée par les moyens de traitement 18 du dispositif 5 pendant le fonctionnement selon le premier mode F1.

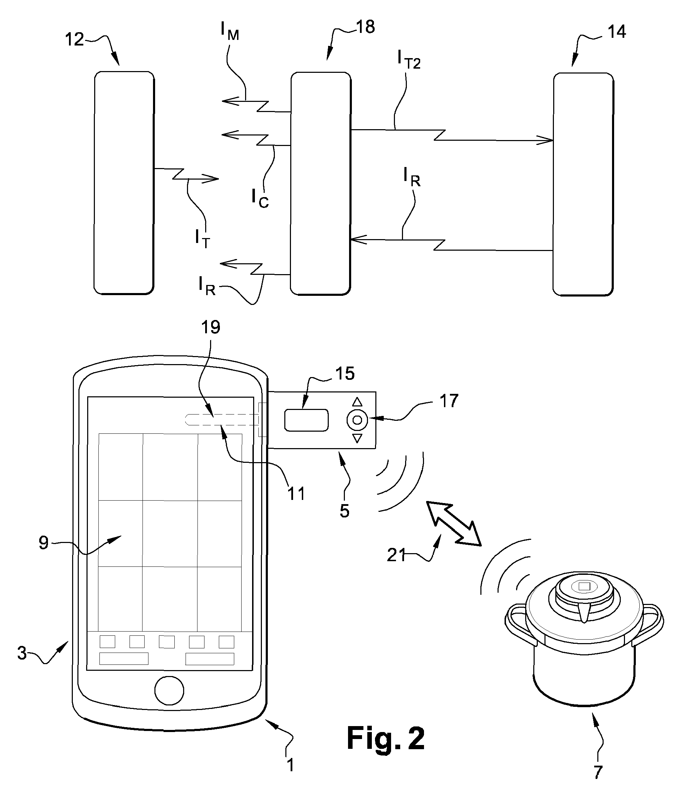

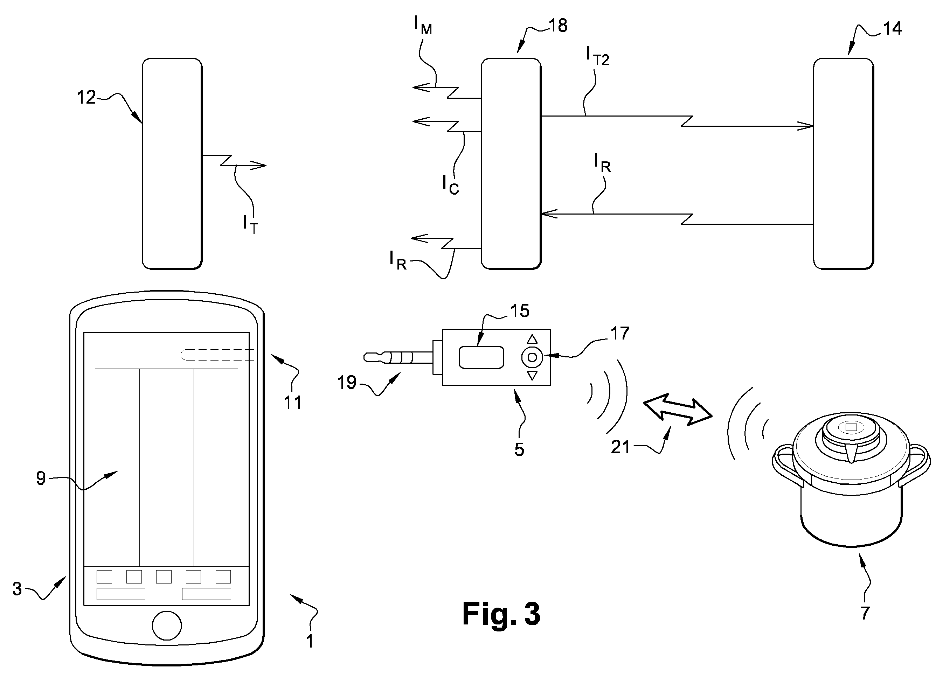

Comme illustré par les figures 2 et 3, le dispositif 5 est apte à recevoir des instructions de commande de l'utilisateur en provenance de l'interface de commande 17. Le dispositif 5 comporte des moyens de traitement d'informations 18 qui génèrent les informations de commande secondaires (I_{T2}) à partir des instructions de commande.

Les informations de commande secondaires (I_{T2}) sont ensuite transmises à l'appareil électroménager 7 par les seconds moyens de communication sans fil 21, comme illustré par la figure E3 sur la figure 5.

L'appareil électroménager 7 comporte des moyens de réception 14 des informations de commande secondaires (I_{T2}). L'appareil électroménager 7 met en oeuvre les informations de commande secondaires (I_{T2}).

L'appareil électroménager 7 comporte des moyens de contrôle des paramètres de fonctionnements. Les moyens de contrôle assurent la génération des informations de contrôle (I_{R}).

L'appareil électroménager 7 comporte des moyens d'émission 14 des informations de contrôle (I_{R}) vers le dispositif 5 par les seconds moyens de communication sans fil 21, comme illustré par la fonction E4 sur la figure 5.

Les informations de contrôle (I_{R}) sont ensuite traitées par les moyens de traitements d'informations 18 du dispositif 5. Les moyens de traitements d'informations 18 prennent en compte les instructions de commande de l'utilisateur et les informations de contrôle (I_{R}) pour l'élaboration informations de commande secondaire (I_{T2}).

Comme illustré par la figure 4, le dispositif 5 comporte des moyens d'affichage 15 d'au moins une information de commande secondaire (I_{T2}) et d'au moins une information de contrôle (I_{R}).

Lorsque le dispositif 5 a de nouveau la capacité de recevoir les informations de commande (I_{T}) du terminal de communication portable 5, le premier mode de fonctionnement F1 redevient actif, comme illustré par la fonction E5, sur la figure 5.

Lors du passage du second au premier mode de fonctionnement, des informations mémorisées (I_{M}) par les moyens de traitement 18 du dispositif 5 sont transférées au terminal 3 par les premiers moyens de communication. Ainsi, les moyens de traitement d'informations 12 du terminal 3 sont à nouveau en mesure d'envoyer des informations de commande (I_{T}) prenant en compte les opérations réalisées par l'appareil électroménager 7 pendant la période de fonctionnement précédente selon le deuxième mode de fonctionnement F2.

Les informations de commande (I_{T}).sont plus nombreuses que les informations de commande secondaire (I_{T2}). On parle alors de fonctions de commande étendues selon le premier mode de fonctionnement F1 et de fonctions basiques selon le deuxième mode de fonctionnement F2.

La présente invention peut servir dans les exemples suivants.

Dans un premier exemple d'utilisation, l'appareil électroménager 7 est un autocuiseur. Le dispositif 5 est raccordé au terminal de communication portable 3 selon le premier mode de fonctionnement F1, comme illustré par la figure 1. Le fonctionnel est étendu : les informations de commande (IT) correspondent à l'ensemble de commandes de l'autocuiseur. Une application dédiée installée sur le terminal de communication portable 3 permet de contrôler et de commander l'autocuiseur à partir de l'interface utilisateur 9.

L'utilisateur est guidé par l'affichage sur le terminal 3 d'instructions provenant d'une recette de cuisine. Les instructions comportent des opérations à réaliser manuellement comme l'incorporation d'un ingrédient dans l'autocuiseur et des opérations de commande à distance comme le démarrage de la cuisson lorsque les ingrédients sont dans l'autocuiseur.

L'autocuiseur transmet à l'application le temps de cuisson restant, il s'agit d'informations de contrôle (I_{R}).

Le dispositif 5 est ensuite débranché du terminal 3 pour écouter de la musique sur le terminal 3. Le second mode de fonctionnement F2 devient alors actif, comme illustré par la fonction E6 sur la figure 5. Les commandes basiques sont assurées par le dispositif 5 et le fonctionnement de l'autocuiseur n'a subi aucune conséquence du passage du premier au second mode de fonctionnement. L'autocuiseur reçoit toujours le temps de cuisson, maintenant sous forme d'information de commande secondaires (I_{T2}). A la fin de la cuisson, l'avertisseur sonore du dispositif 5 sonne pour signaler la fin de cuisson.

Dans un second exemple d'utilisation, l'appareil électroménager est un ventilateur plafonnier. Selon le deuxième mode de fonctionnement F2, le dispositif 5 est une télécommande autonome pilotant les fonctions basiques du ventilateur plafonnier (on/off, sens de rotation, vitesse de rotation, ...).

Lorsque le dispositif 5 est connecté au terminal 5, selon le premier mode de fonctionnement, une application dédiée installée sur le terminal augmente les fonctionnalités. La télécommande désormais composée de l'ensemble de contrôle et de commande 1 permet de commander un éclairage ou un purificateur d'air.

La présente invention a également pour objet un produit programme d'ordinateur destiné à mettre en oeuvre un procéde de constitution d'une structure de données de référence tel que décrit précédemment.

La présente invention a également pour objet un support de données comprenant les instructions dudit produit programme d'ordinateur. La présente invention a également pour objet un tel produit programme d'ordinateur installé sur un calculateur.

## Revendications

1. Procédé de contrôle et/ou de commande du fonctionnement d'au moins un appareil électroménager (7) destiné à être exécuté par un dispositif de contrôle et/ou de commande (5), le procédé définissant un premier (F1) et un deuxième mode de fonctionnement (F2),
le premier mode de fonctionnement (F1) consiste à exécuter les opérations suivantes :
- (E1): recevoir des informations de commandes (I_{T}) en provenance d'un terminal (3) de communication et transmettre ces informations de commandes (I_{T}) à l'au moins un appareil électroménager (7), et/ou
- (E2) : recevoir des informations de contrôle (I_{R}) en provenance de l'au moins un appareil électroménager (7) et transmettre ces informations de contrôle (I_{R}) au terminal de communication (3),
le second mode de fonctionnement (F2) consiste à exécuter les opérations suivantes :
- (E3) : générer des informations de commande secondaire (I_{T2}) et transmettre ces informations de commande secondaire (I_{T2}) à l'au moins un appareil électroménager (7), et/ou
- (E4) : recevoir des informations de contrôle (I_{R}) en provenance de l'au moins un appareil électroménager (7) ;
**Caractérisé en ce que** le procédé comprend les étapes consistant à :
- déterminer continuellement la capacité du dispositif (5) à recevoir des informations de commande (I_{T}) en provenance du terminal de communication (3),
- (E5) : fonctionner selon le premier mode de fonctionnement lorsque le dispositif (5) est en capacité de recevoir des informations de commande (I_{T}) en provenance du terminal de communication (3),
- (E6) : fonctionner selon le second mode de fonctionnement lorsque le dispositif (5) n'est pas en capacité de recevoir des informations de commande (I_{T}) en provenance du terminal de communication (3).

2. Procédé de contrôle et/ou de commande, selon la revendication 1, dans lequel le second mode de fonctionnement (F2) comprend une opération de mémorisation d'au moins une information de contrôle (I_{R}).

3. Procédé de contrôle et/ou de commande, selon l'une des revendications précédentes, dans lequel le second mode de fonctionnement (F2) comprend une opération de mémorisation d'au moins une information de commande secondaire (I_{T2}).

4. Procédé de contrôle et/ou de commande, selon l'une des revendications précédentes, dans lequel le premier mode de fonctionnement (F1) comprend une opération de mémorisation d'au moins une information de commande (I_{T}) par les moyens de traitement de l'information (18) du dispositif (5).

5. Procédé de contrôle et/ou de commande, selon les revendications 2 et 3, dans lequel, le passage (E5) du second (F2) au premier mode fonctionnement (F1) comprend une opération de transfert des informations mémorisées (I_{M}), les informations mémorisées (I_{M}) étant la résultante de l'au moins une information de contrôle (I_{R}) et/ou de l'au moins une information de commande secondaire (I_{T2}) mémorisées par le second mode de fonctionnement (F2).

6. Procédé de contrôle et/ou de commande, selon l'une des revendications précédentes, dans lequel, le premier mode de fonctionnement (F1) comprend une opération de transmission d'informations de commandes déportée (I_{C}) en provenance du dispositif (5) vers le terminal (3).

7. Produit programme d'ordinateur comprenant des portions de code de programme pour l'exécution des étapes d'un procédé selon l'une quelconque des revendications 1 à 6.

8. Support d'enregistrement lisible par un dispositif de contrôle et/ou de commande (5) sur lequel est enregistré un produit programme d'ordinateur selon la revendication 7.

9. Dispositif de contrôle et/ou de commande (5) du fonctionnement d'au moins un appareil électroménager (7) comprenant :
- une prise de connexion complémentaire (19) à une prise de connexion (11) appartenant à un terminal de communication portable (3),
- des premiers moyens de communication selon un premier protocole de communication destinés à assurer une communication par l'intermédiaire de la prise de connexion (11) ; et
- des seconds moyens de communication sans fil (21) selon un second protocole de communication destinés à assurer une communication avec l'au moins un appareil électroménager (7) équipé de moyens de communication sans fil, **caractérisé en ce que** il comprend
- des moyens de traitement d'informations (18) agencés pour mettre en oeuvre les étapes d'un procédé selon l'une quelconque des revendications 1 à 6.

10. Dispositif de contrôle et/ou de commande (5) du fonctionnement d'au moins un appareil électroménager (7) selon la revendication 9, dans lequel des moyens d'affichage (15) sont agencés pour permettre la lecture d'au moins une information mémorisée (I_{M}).

11. Dispositif de contrôle et/ou de commande (5) du fonctionnement d'au moins un appareil électroménager (7) selon l'une des revendications 9 et 10, dans lequel une interface de commande (17) est agencée pour permettre aux moyens de traitement (18) du dispositif (5) :
- la génération des informations de commande secondaire (I_{T2}) selon le premier mode de fonctionnement (F1), ou
- la génération des informations de commande déportée (I_{C}) selon le deuxième mode de fonctionnement (F2).

12. Dispositif de contrôle et/ou de commande (5), selon l'une des revendications 9 à 11, comprenant un élément de protection destiné à envelopper le terminal de communication portable (3) au moins partiellement, le terminal de communication portable (3) étant raccordé au dispositif de contrôle et/ou de commande (5) par la prise de connexion (11).

13. Dispositif de contrôle et/ou de commande (5), selon l'une des revendications 9 à 12 comprenant des moyens de réception et/ou de maintien en position du terminal de communication portable (3) de façon à permettre la lecture sur des moyens d'affichage du terminal (3) lorsque le terminal de communication (3) est reçu par les moyens de réception et/ou de maintien en position,
le dispositif de contrôle et/ou de commande (5) comprenant également un organe de support agencé pour être posé sur une surface plane ou fixé à une paroi.

14. Ensemble de contrôle et/ou de commande (1), composé :
- du terminal de communication (3) comprenant une interface utilisateur (9) comprenant les moyens d'affichage et des moyens de saisie agencés pour permettre la génération des informations de commande (I_{T}) par des moyens de traitement d'information (12) du terminal (3),
- du dispositif de contrôle et/ou de commande (5) selon l'une des revendications 9 à 13.

15. Ensemble de contrôle et/ou de commande (1), selon la revendication 14, dans lequel les premiers moyens de communication entre le terminal de communication portable (3) et le dispositif (5) sont une connexion physique avec un protocole d'échange de données de type flux audio.

16. Ensemble de contrôle et/ou de commande (1), selon l'une des revendications 14 et 15, dans lequel le terminal de communication portable (3) comporte des moyens de connexion à un réseau de communication public, notamment de type internet et/ou réseau de téléphonie mobile; le terminal (3) comportant des moyens de téléchargement d'instructions pour la réalisation d'une fonction d'un appareil électroménager.

## Patentansprüche

1. Verfahren zum Kontrollieren und/oder Steuern des Betriebs mindestens eines Haushaltsgeräts (7), das dazu bestimmt ist, von einer Kontroll- und/oder Steuervorrichtung (5) ausgeführt zu werden, wobei das Verfahren einen ersten Betriebsmodus (F1) und einen zweiten Betriebsmodus (F2) definiert,
wobei der erste Betriebsmodus (F1) darin besteht, die folgenden Vorgänge auszuführen:
- (E1): Empfangen der Steuerinformationen (I_{T}), die von einem Kommunikationsendgerät (3) kommen, und Übertragen dieser Steuerinformationen (I_{T}) zu mindestens einem Haushaltselektrogerät (7), und/oder
- (E2): Empfangen der Kontrollinformationen (I_{R}), die von mindestens einem Haushaltselektrogerät (7) stammen, und Übertragen dieser Kontrollinformationen (I_{R}) zu dem Kommunikationsendgerät (3),
wobei der zweite Betriebsmodus (F2) darin besteht, die folgenden Vorgänge auszuführen:
- (E3): Erzeugen der Hilfssteuerinformationen (I_{T2}) und Übertragen dieser Hilfssteuerinformationen (I_{T2}) zu mindestens einem Haushaltselektrogerät (7), und/oder
- (E4): Empfangen der Kontrollinformationen (I_{R}), die von mindestens einem Haushaltselektrogerät (7) kommen,
**dadurch gekennzeichnet, dass** das Verfahren die Schritte umfasst, die aus Folgendem bestehen:
- laufendes Bestimmen der Kapazität der Vorrichtung (5), Steuerinformationen (I_{T}) zu empfangen, die von dem Kommunikationsendgerät (3) kommen,
- (E5): Funktionieren gemäß dem ersten Betriebsmodus, wenn die Vorrichtung (5) fähig ist, Steuerinformationen (I_{T}), die von dem Kommunikationsendgerät (3) kommen, zu empfangen,
- (E6): Funktionieren gemäß dem zweiten Betriebsmodus, wenn die Vorrichtung (5) nicht fähig ist, Steuerinformationen (I_{T}), die von dem Kommunikationsendgerät (3) kommen, zu empfangen.

2. Verfahren zum Kontrollieren und/oder Steuern nach Anspruch 1, wobei der zweite Betriebsmodus (F2) einen Speichervorgang mindestens einer Kontrollinformation (I_{R}) umfasst.

3. Verfahren zum Kontrollieren und/oder Steuern nach einem der vorhergehenden Ansprüche, wobei der zweite Betriebsmodus (F2) einen Speichervorgang mindestens einer Hilfssteuerinformation (I_{T2}) umfasst.

4. Verfahren zum Kontrollieren und/oder Steuern nach einem der vorhergehenden Ansprüche, wobei der erste Betriebsmodus (F1) einen Speichervorgang mindestens einer Steuerinformation (I_{T}) durch die Informationsverarbeitungsmittel (18) der Vorrichtung (5) umfasst.

5. Verfahren zum Kontrollieren und/oder Steuern nach einem der Ansprüche 2 und 3, wobei der Übergang (E5) von dem zweiten Betriebsmodus (F2) auf den ersten Betriebsmodus (F1) einen Transfervorgang der gespeicherten Informationen (I_{M}) umfasst, wobei die gespeicherten Informationen (I_{M}) die Resultate mindestens einer Kontrollinformation (I_{R}) und/oder mindestens einer Hilfssteuerinformation (I_{T2}), die von dem zweiten Betriebsmodus (F2) gespeichert werden, sind.

6. Verfahren zum Kontrollieren und/oder Steuern nach einem der vorhergehenden Ansprüche, wobei der erste Betriebsmodus (F1) einen Übertragungsvorgang von dezentralen Kontrollinformationen (I_{C}), die von der Vorrichtung (5) kommen, zu dem Endgerät (3) umfasst.

7. Computerprogrammprodukt, das Programmcodeabschnitte zum Ausführen der Schritte eines Verfahrens nach einem der Ansprüche 1 bis 6 umfasst.

8. Aufzeichnungsmedium, das von einer Kontroll- und/oder Steuervorrichtung (5) gelesen werden kann, auf dem Computerprogrammprodukt nach Anspruch 7 aufgezeichnet ist.

9. Kontroll- und/oder Steuervorrichtung (5) des Betriebs mindestens eines Elektrohaushaltsgeräts (7), die Folgendes umfasst:
- einen Steckverbinder (19), der zu einem Steckverbinder (11), der zu einem tragbaren Kommunikationsendgerät (3) gehört, komplementär ist,
- erste Kommunikationsmittel gemäß einem ersten Kommunikationsprotokoll, die dazu bestimmt sind, eine Kommunikation über den Steckverbinder (11) sicherzustellen, und
- zweite drahtlose Kommunikationsmittel (21) gemäß einem zweiten Kommunikationsprotokoll, die dazu bestimmt sind, eine Kommunikation mit mindestens einem Haushaltselektrogerät (7), das mit drahtlosen Kommunikationsmitteln ausgestattet ist, sicherzustellen, **dadurch gekennzeichnet, dass** sie
- Kommunikationsverarbeitungsmittel (18) umfasst, die eingerichtet sind, um die Schritte eines Verfahrens nach einem der Ansprüche 1 bis 6 auszuführen.

10. Kontroll- und/oder Steuervorrichtung (5) des Betriebs mindestens eines Haushaltselektrogeräts (7) nach Anspruch 9, wobei Anzeigemittel (15) eingerichtet sind, um das Ablesen mindestens einer gespeicherten Information (I_{M}) zu erlauben.

11. Kontroll- und/oder Steuervorrichtung (5) des Betriebs mindestens eines Haushaltselektrogeräts (7) nach einem der Ansprüche 9 und 10, wobei eine Steuerschnittstelle (17) eingerichtet ist, um den Verarbeitungsmitteln (18) der Vorrichtung (5) Folgendes zu erlauben:
- das Erzeugen der Hilfssteuerinformationen (I_{T2}) gemäß dem ersten Betriebsmodus (F1), oder
- das Erzeugen der dezentralen Steuerinformationen (I_{C}) gemäß dem zweiten Betriebsmodus (F2).

12. Kontroll- und/oder Steuervorrichtung (5) nach einem der Ansprüche 9 bis 11, die ein Schutzelement umfasst, das dazu bestimmt ist, das tragbare Kommunikationsendgerät (3) mindestens teilweise zu umhüllen, wobei das tragbare Kommunikationsendgerät (3) an die Kontroll- und/oder Steuervorrichtung (5) durch den Steckverbinder (11) angeschlossen ist.

13. Kontroll- und/oder Steuervorrichtung (5) nach einem der Ansprüche 9 bis 12, die Mittel zum Aufnehmen und/oder zum Halten des tragbaren Kommunikationsendgeräts (3) in Position derart umfasst, dass das Ablesen auf den Anzeigemitteln des Endgeräts (3) erlaubt wird, wenn das Kommunikationsendgerät (3) von den Aufnahme- und/oder Positionshaltemitteln aufgenommen ist,
wobei die Kontroll- und/oder Steuervorrichtung (5) auch ein Tragelement umfasst, das eingerichtet ist, um auf einer flachen Oberfläche abgelegt oder an einer Wand befestigt zu sein.

14. Kontroll- und/oder Steuereinheit (1), die aus Folgendem zusammengesetzt ist:
- aus dem Kommunikationsendgerät (3), das eine Benutzeroberfläche (9) umfasst, die Anzeigemittel und Mittel zum Ergreifen umfasst, die eingerichtet sind, um das Erzeugen der Steuerinformationen (I_{T}) durch Informationsverarbeitungsmittel (12) des Endgeräts (3) zu erlauben,
- aus der Kontroll- und/oder Steuervorrichtung (5) nach einem der Ansprüche 9 bis 13.

15. Kontroll- und/oder Steuereinheit (1) nach Anspruch 14, wobei die ersten Kommunikationsmittel zwischen dem tragbaren Kommunikationsendgerät (3) und der Vorrichtung (5) eine physische Verbindung mit einem Datenaustauschprotokoll des Typs Audiostrom sind.

16. Kontroll- und/oder Steuereinheit (1) nach einem der Ansprüche 14 und 15, wobei das tragbare Kommunikationsendgerät (3) Mittel zum Anschließen an ein öffentliches Kommunikationsnetzwerk, insbesondere des Typs Internet und/oder Mobiltelefonienetzwerk, umfasst, wobei das Endgerät (3) Mittel zum Herunterladen von Anweisungen für die Ausführung einer Funktion eines Haushaltselektrogeräts umfasst.

## Claims

1. A method for monitoring and/or controlling the operation of at least one household appliance (7), intended to be performed by a monitoring and/or control device (5), the method defining a first (F1) and a second (F2) operating modes,
the first operating mode (F1) consists in carrying out the following operations:
- (E1): receiving control information (I_{T}) derived from a communication terminal (3) and transmitting these control information (I_{T}) to the at least one household appliance (7), and/or
- (E2): receiving monitoring information (I_{R}) derived from the at least one household appliance (7) and transmitting these monitoring information (I_{R}) to the communication terminal (3),
the second operating mode (F2) consists in carrying out the following operations:
- (E3): generating secondary control information (I_{T2}) and transmitting these secondary control information (I_{T2}) to the at least one household appliance (7), and/or
- (E4): receiving monitoring information (I_{R}) derived from the at least one household appliance (7);
**characterized in that** the method comprises the steps consisting in:
- continuously determining the capacity of the device (5) to receive control information (I_{T}) derived from the communication terminal (3),
- (E5): operating according to the first operating mode when the device (5) is capable of receiving control information (I_{T}) derived from the communication terminal (3),
- (E6): operating according to the second operating mode when the device (5) is not capable of receiving control information (I_{T}) derived from the communication terminal (3).

2. The monitoring and/or control method according to claim 1, wherein the second operating mode (F2) comprises an operation of storing at least one monitoring information (I_{R}).

3. The monitoring and/or control method according to any of the preceding claims, wherein the second operating mode (F2) comprises an operation of storing at least one secondary control information (I_{T2}).

4. The monitoring and/or control method according to any of the preceding claims, wherein the first operating mode (F1) comprises an operation of storing at least one control information (I_{T}) by the information processing means (18) of the device (5).

5. The monitoring and/or control method according to claims 2 and 3, wherein the switch (E5) from the second (F2) to the first (F1) operating mode comprises an operation of transferring stored information (I_{M}), the stored information (I_{M}) being the resultant of the at least one monitoring information (I_{R}) and/or the at least one secondary control information (I_{T2}) stored by the second operating mode (F2).

6. The monitoring and/or control method according to any of the preceding claims, wherein the first operating mode (F1) comprises a remote operation of transmitting control information (I_{C}) derived from the device (5) to the terminal (3).

7. A computer program product comprising program code portions for carrying out the steps of a method according to any one of claims 1 to 6.

8. A recording medium readable by a monitoring and/or control device (5) on which a computer program product is recorded according to claim 7.

9. A device (5) for monitoring and/or controlling the operation of at least one household appliance (7) comprising:
- a connecting socket (19) complementary to a connecting socket (11) belonging to a portable communication terminal (3),
- first communication means according to a first communication protocol intended to ensure a communication through the connecting socket (11); and
- second wireless communication means (21) according to a second communication protocol intended to ensure a communication with the at least one household appliance (7) equipped with wireless communication means, **characterized in that** it comprises:
- information processing means (18) arranged to implement the steps of a method according to any one of claims 1 to 6.

10. The device (5) for monitoring and/or controlling the operation of at least one household appliance (7) according to claim 9, wherein display means (15) are arranged to allow the reading of at least one stored information (I_{M}).

11. The device (5) for monitoring and/or controlling the operation of at least one household appliance (7) according to any of claims 9 and 10, wherein a control interface (17) is arranged to allow the processing means (18) of the device (5) to:
- generate secondary control information (I_{T2}) according to the first operating mode (F1), or
- generate remote control information (I_{C}) according to the second operating mode (F2).

12. The monitoring and/or control device (5) according to any of claims 9 to 11, comprising a protective element intended to envelope at least partially the portable communication terminal (3), the portable communication terminal (3) being linked to the monitoring and/or control device (5) with the connecting socket (11).

13. The monitoring and/or control device (5) according to any of claims 9 to 12 comprising means for receiving and/or holding in position the portable communication terminal (3) so as to allow the reading on display means of the terminal (3) when the communication terminal (3) is received by the receiving and/or position holding means,
the monitoring and/or control device (5) also comprising a support member arranged to be placed on a flat surface or fastened to a wall.

14. A monitoring and/or control assembly (1) composed of:
- the communication terminal (3) comprising a user interface (9) comprising the display means and input means arranged to allow the generation of the control information (I_{T}) by information processing means (12) of the terminal (3),
- the monitoring and/or control device (5) according to any of claims 9 to 13.

15. The monitoring and/or control assembly (1) according to claim 14, wherein the first communication means between the portable communication terminal (3) and the device (5) are a physical connection with an exchange protocol of audio stream type data.

16. The monitoring and/or control assembly (1) according to any of claims 14 and 15, wherein the portable communication terminal (3) includes means for connection to a public communication network, in particular of the Internet and/or mobile telephony network type; the terminal (3) including instruction download means for carrying out a function of a household appliance.
